# EUROPEAN PATENT APPLICATION

(11) **EP 3 035 464 A1**
(43) Date of publication of application: **22.06.2016**
(21) Application number: 15446508.2
(22) Date of filing: 16.12.2015
(51) Int. Cl.: H02G 3/08, H02G 15/007, H01B 17/58, H02G 3/32

(54) **A STRAIN RELIEF DEVICE FOR EMBEDDED INSTALLATION BOXES AND AN INSTALLATION BOX HAVING SUCH A STRAIN RELIEF DEVICE**

(30) Priority: 17.12.2014 SE 1451566
(71) Applicant: Schneider Electric Industries SAS, 92500 Rueil-Malmaison (FR)
(72) Inventor: WÄNGSTRE, Håkan, 611 37 Nyköping (SE); Kullolli, Dharmveer M, 580001 Karnataka (IN)
(74) Representative: Groth & Co. KB

(57) **Abstract**

Strain relief device for an installation box, wherein the strain relief device (10) has a first side (11) and a second side (12), the second side (12) of the strain relief device (10) being provided with a collar (13) having a cable lead-through (14) and which collar (13) is formed with an inner collar portion (15) and an outer collar portion (16), the inner collar portion (15) having a smaller diameter than the outer collar portion (16), and that the first side (11) is provided with a holder means (17) and a clamping means (18), which clamping means (18) is movable in the holder means (17) to pressing around a cable (71) inserted through the cable lead-through (14), as well as an installation box provided with such a strain relief device.

## Description

### Technical Field

The present invention relates to installation boxes for electrical applications and particularly to strain relief devices for embedded or flush-mounted installation boxes.

### Background of the Invention

Previously known strain relief devices for installation boxes have been of the type having a fixedly arranged screw clamp around the electric cable, which screw clamp is applied by two screws on each side of the cable, or of the type having a loose screw ring around the cable on the opposite side of the box in relation to the strain direction.

This type of strain relief device is limited to a certain cable diameter, wherein quite a number of strain relief devices have to be at hand upon each installation. In addition, tools are required to provide the strain relief.

### The Object of the Invention

The object of the invention is to provide a retrofittable strain relief device for installation boxes.

A further object is to provide a strain relief device that can be used for a wider span of cable diameters than earlier.

In addition, the object is to use the same strain relief device for both internal and external strain relief.

An object is also to, without tools, be able to mount a strain relief device to an installation box.

An object is also to maintain the safety class of the box after a cable has been mounted.

### Summary of the Invention

By the present invention, as this appears in the independent claim, the above-mentioned objects are met, wherein said disadvantages have been eliminated. Suitable embodiments of the invention are defined in the dependent claims.

The invention concerns a strain relief device for an installation box for electrical installations. Preferably, the invention is intended for embedded installation boxes complying with current tightness classes. The strain relief device has a first side and a second side as well as a cable lead-through, the first side of the strain relief device being provided with a holder means and a clamping means, which clamping means is movable in the holder means to pressing around a cable inserted through the cable lead-through, the second side of the strain relief device being provided with a collar, which collar is formed with an inner collar portion and an outer collar portion, the inner collar portion having a smaller diameter than the outer collar portion. The collar is essentially cylindrical, wherein it can be pressed into a circular hole in the box. Such circular holes are arranged in installation boxes and if the box is tightness classified, the hole is covered by an elastic membrane, which is torn away upon the application of a strain relief device according to the invention. The large advantages of such a strain relief device is that it can be attached by snap action into an installation box without tools and that also the strain relief may be activated without tools.

In one embodiment of the invention, the clamping means is rectilinearly movable in the holder means, wherein the clamping means can be displaced in parallel in a box-shaped holder on one side of the strain relief device. This embodiment means that a fitter easily can press the clamping means straight against the cable for a strain relief.

In one embodiment of the invention, either the clamping means or the holder means is provided with arresting teeth, which interact with at least one ratchet arranged in the holder means or in the clamping means for the locking of the clamping means in a pressed position. Thus, a locking is obtained of the clamping means in pressed position without tools needing to be used.

In one embodiment of the invention, a number of teeth are arranged in one of the means and two ratchets are arranged in the other one of the means.

In one embodiment of the invention, the teeth are placed in the clamping means and one or two ratchets are placed in the holder means.

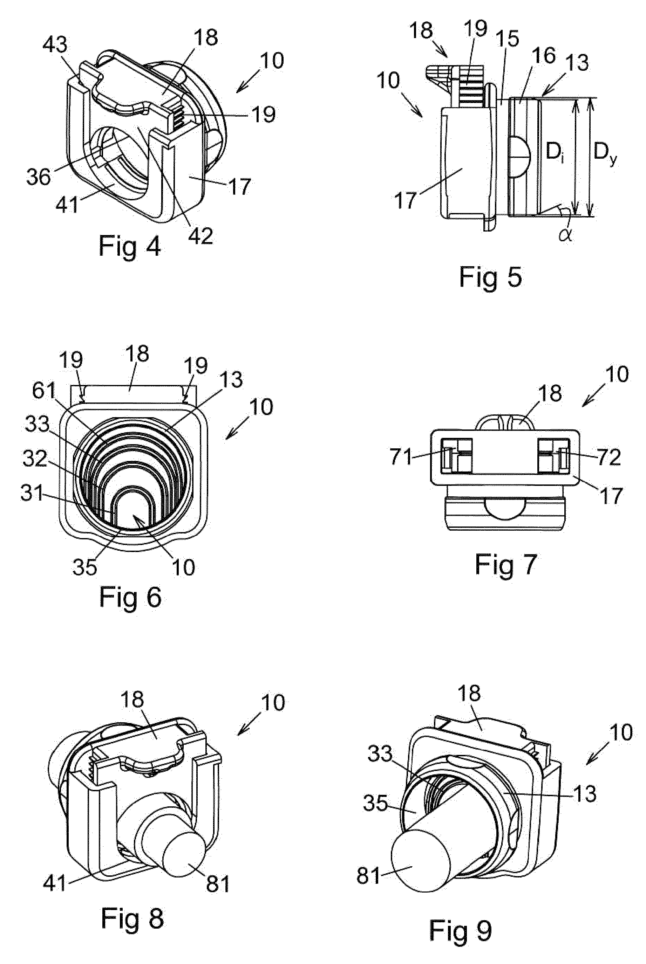

In one embodiment of the invention, the clamping means is permanently connected to the holder means via a joining means. This embodiment means that the entire strain relief device may be integrally manufactured but that the parts in certain embodiments easily can be separated in use. In addition, the parts are held together at least until mounting and strain relief take place. Naturally, the two parts of the strain relief device may also be individually manufactured and then be assembled before packaging and sale according to what is shown in Figure 4.

In one embodiment of the invention, the joining means is of a hinge for an angular motion of the clamping means into locking of the cable in the strain relief device. Also this embodiment may be integrally manufactured but naturally the parts are not separated from each other. In combination with certain types of boxes, this angular motion of the clamping means may be preferable.

In one embodiment of the invention, the cable lead-through is closed by a membrane. Said membrane may be penetrated by the cable but still be sealing around the same. The membrane aims at providing a tight installation box complying with current tightness classes in spite of the original membrane of the box having been removed.

In one embodiment of the invention, the membrane is provided with at least one indication of fracture the side of which is tangent to the inner surface of the collar. This asymmetrical location of the indication of fracture aims at making the cable to abut against the inside of the collar on the opposite side from the clamping means so that the same presses the cable against the inside of the collar.

Furthermore, the invention concerns an installation box formed with at least one circular cable connection, which either is open or provided with an elastic breakable sealing membrane, in which cable connection a strain relief device according to what has previously been described is mounted. As to the rest, the installation box is provided with mounting devices for mounting the box in a wall or in a ceiling as well as for mounting electrical consumption devices in the box.

### Brief Description of the Drawings

Now, the invention will be described in more detail, references being made in connection with the accompanying drawing figures.
- Figure 1: shows a perspective view of a strain relief device according to an embodiment of the invention.
- Figure 2: shows the strain relief device in Figure 1 at another angle.
- Figure 3: shows the strain relief device in Figure 1 from the opposite side.
- Figure 4: shows the strain relief device according to Figures 1-2 in an activated state.
- Figure 5: shows the strain relief device according to Figure 4 in a side view.
- Figure 6: shows the strain relief device according to Figure 5 in a front view.
- Figure 7: shows the strain relief device according to Figure 5 in a bottom view.
- Figs. 8-9: show strain relief device activated around a cable.
- Figs. 10-11: show a strain relief device according to the invention mounted from the outside of an installation box.
- Figs. 12-13: show a strain relief device according to the invention mounted from the inside of an installation box.

### Description of the Invention

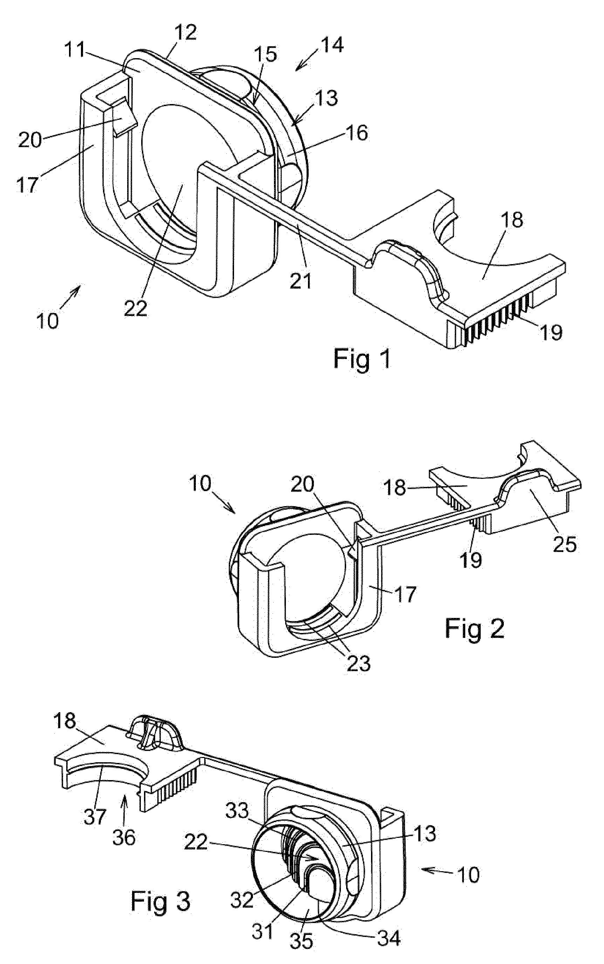

Figure 1 shows a strain relief device 10, which is provided with a holder means 17 connected to a first side 11 of the strain relief device and having a collar 13 connected to a second side 12 of the strain relief device. The collar 13 is rotationally symmetrically shaped and is provided with a cable lead-through 14. The collar is further formed with an inner collar portion 15 and an outer collar portion 16, which collar portions are formed so that the inner collar portion 15 has a smaller diameter than the outer collar portion. Furthermore, the outer collar portion is formed with an outwardly tapering diameter with the purpose of facilitating the mounting of the strain relief device. Upon the mounting, the collar of the strain relief device is pressed into a hole in an installation box either from the inside of the box or from the outside of the box. In doing so, the collar will be snapped-in into the box and seal against the edge of the box in the hole. The holder means 17 on the first side 11 of the box is formed with parallel insides between which a clamping means 18 can be inserted rectilinearly for a pressing against a cable inserted in the lead-through. The clamping means 18 is provided with teeth 19, which interact with a ratchet 20 in the inside of the holder means, wherein the clamping means can be locked in a pressed position. As is seen in the figure, the clamping means 18 is preferably connected to the holder means 17 via a joining means 21, which holds the parts together before pressing against the cable. This joining means is flexible and may also easily be clipped off. Furthermore, the cable lead-through 14 is provided with a sealing membrane 22.

Also an embodiment of a strain relief device may be conceivable wherein the clamping means is connected to the holder means via a joint in the form of a hinge, the clamping means and the holder means being formed for an angular motion around the hinge instead of a translation motion. Also in such an embodiment, the locking takes place in a pressed position by means of teeth locking against a ratchet.

Figure 2 shows that the clamping means 18 of the strain relief device 10 is provided with teeth 19 also on the opposite side to interact with a similar ratchet 20 on the opposite side of the holder means 17. The holder means 17 is also provided with two parallel cable friction means 23 placed on the inside of and in the lower portion of the holder means. The figure also shows that the clamping means 18 is provided with a press support 25, which facilitates a pressing against the cable.

Figure 3 shows the strain relief device 10 from the other side in relation to Figures 1-2, the membrane 22 being provided with indications of fracture 31, 32, 33 to facilitate for a cable to be inserted through the strain relief device and in addition to end up in correct position in relation to the collar 13. As is seen in the figure, the side 34 of the indications of fracture is tangent to the inner surface 35 of the collar, wherein a cable led through will abut against the collar 13 and the membrane will not be deformed upon a pressing when the clamping means 18 is pressed down against the cable. The clamping means 18 is formed with a circular arc-shaped recess 36, which is provided with an internal cable friction means 37. This cable friction means 36 and the cable friction means 23 that are shown in Figure 2 interact to eliminate the sliding of a cable inserted in the strain relief device.

Figure 4 shows the strain relief device 10 activated by the clamping means 18 being inserted in the holder means 17, wherein the teeth 19 arrest at the respective side against the ratchets 20 shown in Figures 1-2. The figure shows that the joining means between the parts 18, 19 has been removed. The strain relief device is shown in the figure without cable to show the circular arc-shaped recess 36 in the clamping means 18 and a corresponding circular arc-shaped recess 41 in the holder means 17. The clamping means 18 is formed with a flat external guide surface 42, which slides against a likewise flat internal guide surface 43 in the holder means 17.

Figure 5 shows the strain relief device 10 as activated in a side view with the smaller diameter Dᵢ of the inner collar portion 15 of the collar 13 and the greater diameter D_{y} of the outer collar portion 16 of the collar 13 and with the outer collar portion 16 having an outwardly tapering angle α. The figure also shows the clamping means 18 partly pressed-in in the holder means 17, the teeth 19 arresting the holder means from being pressed out of the holder means.

Figure 6 shows the strain relief device 10 in a front plan view wherein the membrane 22 is provided with four indications of fracture 31, 32, 33, 61, which all extend out to the inner surface 35 of the collar 13. The inner surface 35 is cylindrically shaped and having a diameter of 10-30 mm. The figure also shows the clamping means 18 with its teeth 19.

Figure 7 shows the strain relief device 10 from below, the clamping means 18 being inserted in the holder means 17, which is provided with rectangular holes 71, 72 in its bottom, which allow the clamping means to be inserted sufficiently far to jam a cable having a small diameter in the circular arc-shaped recesses of said means 17, 18, the two sides of the clamping means projecting into and possibly out of said rectangular holes 71, 72.

Figure 8 shows the strain relief device 10 from the holder side, activated by a cable 81 having been brought through the lead-through and pressed by the clamping means 18 into locking in the strain relief device. When the clamping means has jammed the cable, the same abuts against the circular arc-shaped recess 41 of the holder means.

Figure 9 shows the strain relief device 10 from the collar side, activated by the clamping means 18 pressing the cable 81 against the inner surface 35 of the collar 13. Also the membrane with some indications of fracture 33 appears through of the collar opening.

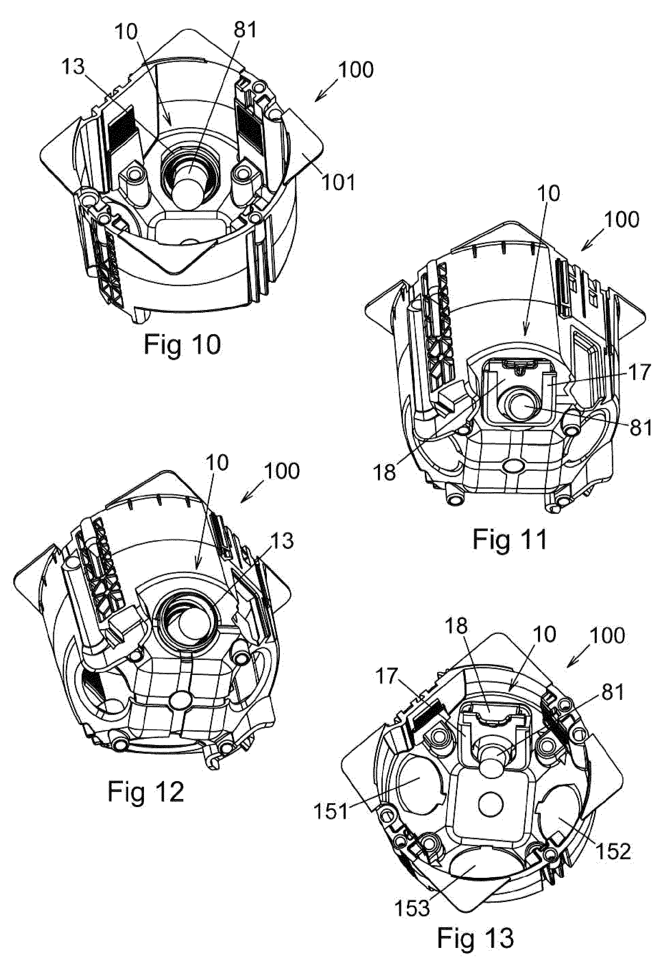

Figure 10 shows an installation box 100 for electrical cables 81. The box shown in the figure is a single box but the invention also relates to other types of boxes, for instance double boxes. The boxes are preferably of the embedded type where a user device such as a contact, switch or electrical-fittings connection is mounted flush with the upper supporting edge 101 of the box. The boxes are preferably prepared with breakable circular notches of holes, which are broken when a strain relief device according to the invention is mounted in the box. The figure shows a strain relief device 10 mounted from the outside of the box wherein the collar 13 thereof has been pressed in through the broken-through circular hole. Furthermore, the membrane of the strain relief device has been penetrated by a cable 81, which thereby can be connected to coupling devices, not shown, in the box.

Figure 11 shows the mounting of the strain relief device 10 according to Figure 10 from the outside of the installation box 100 wherein the holder means 17 and clamping means 18 of the strain relief device 10 are externally placed to be pressed against the cable 81.

Figure 12 shows a mounting of the strain relief device 10 from the inside of the installation box 100, the collar 13 having been pressed through a circular cable connection in the form of a mounting hole in the box from the inside.
Figure 13 shows the inside of the installation box 100 in Figure 12, wherein the strain relief device 10 is shown with the holder means 17 and the clamping means 18 is internally placed to be pressed against the cable 81. The box is further provided with three additional circular cable connections 151, 152, 153, which may be provided with strain relief devices for connected cables. Said cable connections 151, 152, 153 are usually sealed by a rubber membrane or a polymeric membrane, which is integrated with the rest of the box for the box to be tight.

As to the rest, the installation box 100 according to Figures 10-13 is provided with mounting devices for mounting the box in a wall or in a ceiling as well as for mounting electrical consumption devices in the box.

## Claims

1. Strain relief device for an installation box, **characterized in that** the strain relief device (10) has a first side (11) and a second side (12) as well as a cable lead-through (14), the first side (11) of the strain relief device being provided with a holder means (17) and a clamping means (18), which clamping means (18) is movable in the holder means (17) to pressing around a cable (71) inserted through the cable lead-through (14), the second side (12) of the strain relief device (10) being provided with a collar (13), which collar (13) is formed with an inner collar portion (15) and an outer collar portion (16), the inner collar portion (15) having a smaller diameter than the outer collar portion (16).

2. Strain relief device according to claim 1, **characterized in that** the clamping means (18) is rectilinearly movable in the holder means (17).

3. Strain relief device according to any one of claims 1-2, **characterized in that** either the clamping means (18) or the holder means (17) is provided with teeth (19), which interact with at least one ratchet (20) arranged in the holder means (17) or in the clamping means (18) for the locking of the clamping means in a pressed position.

4. Strain relief device according to any one of claims 1-3, **characterized in that** a number of teeth (19) are arranged in one of the means (17, 18), and that at least one ratchet (20) is arranged in the other one of the means (17, 18).

5. Strain relief device according to any one of claims 3-4, **characterized in that** the teeth (19) are placed in the clamping means (18), and that one or two ratchets are placed in the holder means (17).

6. Strain relief device according to any one of claims 1-5, **characterized in that** the clamping means (18) is permanently connected to the holder means (17) via a joining means (21).

7. Strain relief device according to claim 6 when this is dependent only on claim 1, **characterized in that** the joining means (21) is a hinge for an angular motion of the clamping means (18) in the holder means (17).

8. Strain relief device according to any one of claims 1-7, **characterized in that** the cable lead-through (14) is closed by a membrane (22).

9. Strain relief device according to claim 8, **characterized in that** the membrane (22) is provided with at least one indication of fracture (31, 32, 33) the side (34) of which is tangent to the inner surface (35) of the collar (13).

10. Installation box (100) formed with at least one circular cable connection (151, 152, 153), which either is open or provided with an elastic breakable sealing membrane, in which cable connection a strain relief device (10) according to any one of claims 1-9 is mounted.
